(19) Europäisches Patentamt
European Patent Office
Office européen des brevets

(11) **EP 2 227 021 A1**

(12) **EUROPEAN PATENT APPLICATION**
published in accordance with Art. 153(4) EPC

(43) Date of publication:
**08.09.2010 Bulletin 2010/36**

(21) Application number: **08871468.8**

(22) Date of filing: **16.12.2008**

(51) Int Cl.:
*H04N 7/26* (2006.01)          *H04N 13/00* (2006.01)
*H04N 13/04* (2006.01)

(86) International application number:
**PCT/CN2008/073522**

(87) International publication number:
**WO 2009/092233 (30.07.2009 Gazette 2009/31)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.12.2007   CN 200710305690**

(71) Applicant: **Huawei Device Co., Ltd.**
**Longgang District**
**Shenzhen**
**Guangdong 518129 (CN)**

(72) Inventor: **LIU, Yuan**
**Guangdong 518129 (CN)**

(74) Representative: **Epping - Hermann - Fischer**
**Patentanwaltsgesellschaft mbH**
**Ridlerstrasse 55**
**80339 München (DE)**

(54) **AN APPARATUS, SYSTEM AND METHOD FOR MULTI-VIEW PHOTOGRAPHING AND IMAGE PROCESSING AND A DECODING PROCESSING METHOD**

(57)    An apparatus, a system, and a method for recording a multi-view video and processing pictures, and a decoding method are disclosed. The apparatus for recording a multi-view video and processing pictures includes a video recording unit, a collecting unit, a selecting unit, and an encoding unit, which are connected in sequence. The video recording unit is configured to: record a video including recording a multi-view video, and output 3D video data; the collecting unit is configured to collect 3D video data output by the video recording unit; the selecting unit is configured to select at least one channel of data among the 3D video data; and the encoding unit is configured to encode data including encoding the 3D video data selected by the selecting unit.

FIG. 2

**Description**

This application claims priority of Chinese Patent Application No. 200710305690.1, filed with the Chinese Patent Office on December 28, 2007 and entitled "Apparatus, System and Method for Recording a Multi-View Video and Processing Pictures, and Decoding Method", which is hereby incorporated by reference in its entirety.

FIELD OF THE INVENTION

The present invention relates to video processing, and in particular, to an apparatus, a system, and a method for recording a multi-view video and processing pictures, and a decoding method.

BACKGROUND

The three-dimensional (3D) video technology may provide pictures that comply with 3D visual principles and have depth information, so the views of the objective world recur veritably, and authenticity and senses of depth and hierarchy of scenes are presented. The 3D video technology is an important trend of current video technologies.
Two main research hot spots in the current video research field are: binocular 3D video, and Multi-View Coding (MVC) video. The basic principles of the binocular 3D video are: simulating principles of human eye imaging, using two vidicons to obtain the left eye picture and the right eye picture independently, letting the left eye of a person see the left eye path picture and letting the right eye of the person see the right eye path picture, and finally synthesizing the pictures to obtain 3D pictures. An MVC video is obtained by multiple vidicons to record a video simultaneously from different angles, and has multiple video paths. At the time of playing the video, the scene pictures at the different angles are sent to a user terminal such as a television screen. When watching the video, the user can select different angles to watch different scene pictures.
The conventional art discloses a method and a device for multiplexing multi-view 3D motional pictures according to requirements of a user. In this method, the motional pictures collected by the multi-view vidicons are encoded and multi-view encoded streams are generated, reverse channel information of the user is received and proper encoded streams are selected according to the information to perform synchronous multiplexing according to frames or scenes. The method includes:

Step 101: Obtain motional pictures and information from multiple vidicons, and generate multiple multi-view encoded streams.
Step 102: Receive view information and the user-selected display mode information from reversed channels.
Step 103: According to the reversed channel information, select a group of encoded streams among the multi-view encoded streams for multiplexing in a frame-by-frame manner or in a scene-by- scene manner, where every stream has the same time information.

In the process of developing the present invention, the inventor finds at least the following problems in the conventional art of multiplexing multi-view 3D motional pictures:

The foregoing MVC technology uses multiple vidicons to obtain picture data for the same scene from different view angles at a same time, encodes all the picture data, and then selects one group of encoded streams for multiplexing among the multi-view code streams. The encoding consumes plenty of encoding resources, the encoding is very time consuming, and the required encode processing capability of the system is very high.

SUMMARY

The embodiments of the present invention provide an apparatus, a system, and a method for recording a multi-view video and processing pictures, and a decoding method to improve efficiency of collecting and encoding multi-view pictures and lower the requirement of processing capability of the system.
An apparatus for recording a multi-view video and processing pictures includes a video recording unit, a collecting unit, a selecting unit, and an encoding unit, which are connected in sequence. The video recording unit is configured to record a multi-view video and output 3D video data. The collecting unit is configured to collect 3D video data output by the video recording unit. The selecting unit is configured to select at least one channel of the 3D video data among the 3D video data. The encoding unit is configured to encode data including the 3D video data selected by the selecting unit.
An apparatus for decoding a multi-view video, processing and displaying pictures includes:

an input control unit, configured to send instructions, including sending an instruction of recording a video at a specified view angle; and
a decoding unit, configured to decode data which are obtained from video recording at the specified view angle and encoded.

A system for recording a multi-view video and processing pictures includes: an apparatus for recording a multi-view video and processing pictures and an apparatus for decoding a multi-view video, processing and displaying pictures which is interconnected with the apparatus for recording a multi-view video and processing pictures The apparatus for recording a multi-view video and processing pictures is configured to record a multi-view video, output three-dimensional (3D) video data, select at least one channel of data among the 3D video data, encode the at least one channel of data, and send the encoded at least one channel of data to an apparatus for decoding a multi-view video, processing and displaying pictures. The apparatus for decoding a multi-view video, processing and displaying pictures is configured to: send an instruction of recording a video at a specified view angle to the apparatus for recording a multi-view video and processing pictures, and decode the encoded at least one channel of data sent by the apparatus for recording a multi-view video and processing pictures.

A method for recording a video and processing pictures includes:

recording a multi-view video and outputting 3D video data;
selecting at least one channel of data among the 3D video data; and encoding the selected 3D video data.

A method for decoding a video and processing pictures includes:

inputting information about a view angle of a user and distance between the user and the display surface, and decoding received 3D video data; and
reconstructing pictures out of the decoded 3D video data according to the information about the view angle and distance, obtaining pictures suitable for the user to watch, and displaying the pictures.

As can be seen from the above technical solutions, Unlike the conventional art which encodes video data photographed at all view angles and makes the system bear a heavy load, the technical solution of the present invention encodes only the video streams as required, or encodes only the video streams as indicated by an input instruction for designating a view angle, thus simplifying the collection and/or encoding, improving efficiency of collection and encoding, and reducing the requirement of processing capability of the system.

BRIEF DESCRIPTION OF THE DRAWINGS

FIG. 1 is a flowchart of a method for multiplexing multi-view 3D motional pictures in the conventional art;
FIG. 2 is a schematic diagram of an apparatus for recording a multi-view video and processing pictures in the first embodiment of the present invention;
FIG. 3 is a schematic diagram of an apparatus for recording a multi-view video and processing pictures in the second embodiment of the present invention;
FIG. 4 is a schematic diagram of an apparatus for decoding a multi-view video, processing and displaying pictures in the first embodiment of the present invention;
FIG. 5 is a schematic diagram of a system for recording a multi-view video and processing pictures in the first embodiment of the present invention;
FIG. 6 shows working principles of a system for recording a multi-view video and processing pictures in the first embodiment of the present invention;
FIG. 7 shows relationships between picture parallax, object depth, and user-display distance under a parallel vidicon system;
FIG. 8 is an overall working diagram of a system for recording a multi-view video and processing pictures in an embodiment of the present invention;
FIG. 9 is a flowchart of video collection and encoding shown in FIG. 8;
FIG. 10 shows working principles of an apparatus for recording a video and processing pictures in an embodiment of the present invention;
FIG. 11 is a flowchart of a method for recording a video and processing pictures in the first embodiment of the present invention; and
FIG. 12 is a flowchart of a method for decoding videos and processing pictures in the first embodiment of the present invention.

DETAILED DESCRIPTION OF THE EMBODIMENTS

In order to make the technical solution, objectives, and merits of the present invention clearer, the following describes the embodiments of the present invention in more detail with reference to accompanying drawings.

One aspect of the present invention is to control operations of recording a multi-view video and processing pictures, select some of the view angles for video recording in the multi-view video recording operation according to the view angle requirement, or select video data of part of view angles among multiple-channel video data obtained from the video recording according to the view angle requirement, or adjust the recording angle of the vidicon according to the view angle requirement, or select reconstructible video data recorded at two view angles according to the view angle requirement, and then encode the video data obtained from the recording, in order to improve efficiency of collection and encoding and lower the requirement of processing capability of the system.

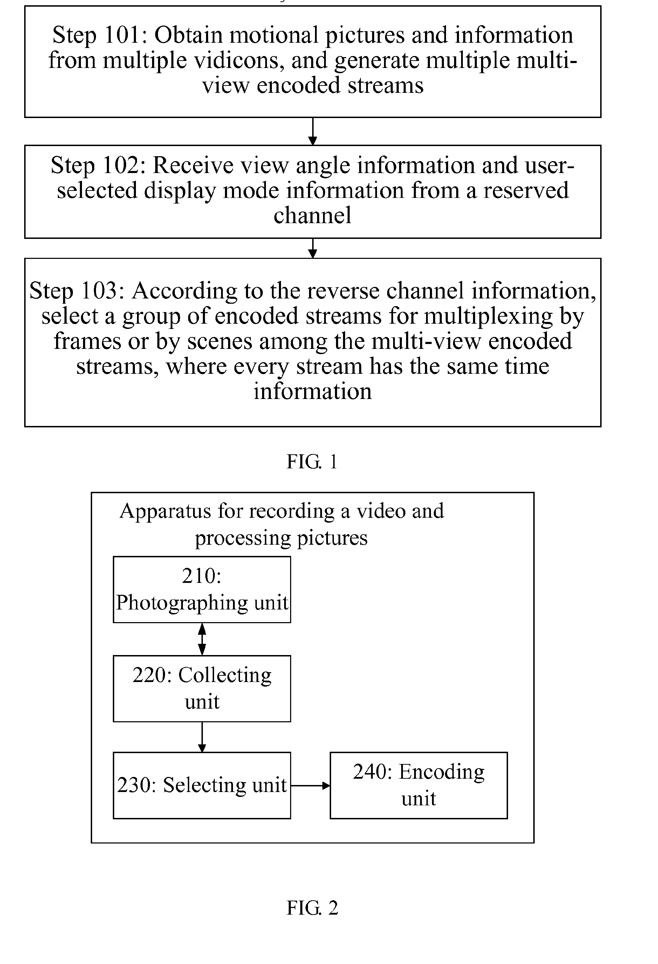

FIG. 2 is a schematic diagram of an apparatus for recording a multi-view video and processing pictures in the first embodiment of the present invention. The apparatus includes a video recording unit 210, a collecting unit 220, a selecting unit 230, and an encoding unit 240, which are connected in sequence.

The video recording unit 210 is configured to record a video, including recording a multi-view video, and producing 3D video data.

The collecting unit 220 is configured to collect the 3D video data produced by the video recording unit.

The selecting unit 230 is configured to select at least one channel of data among the 3D video data.

The encoding unit 240 is configured to encode data, including the 3D video data selected by the selecting unit 230.

As can be seen from the above embodiment, unlike the conventional art according to which encoding video data recorded at all view angles unselectively to cause the system bear a heavy load, the embodiment of the present invention selects part of the video streams for encoding by the selecting unit 230 according to the instruction for designating a view angle sent by the user in multi-view video recording. Thus complexity of collecting and/or encoding can be efficiently reduced, efficiency of collection and encoding is improved, and the requirement for processing capability of the system is reduced.

In other embodiments, the selecting unit 230 is configured to: match the view angle information of each channel of data with the view angle carried in the instruction for designating a view angle one by one according to the received instruction for designating the view angle, and obtain at least one channel of 3D video data corresponding to the specified view angle.

In other embodiments, the selecting unit 230 is integrated in the video recording unit 210, collecting unit 220, or encoding unit 240.

The encoding content of the encoding unit 240 includes at least one of the following:

original video data;
original video data and parallax data or depth data; and
original video data, parallax data or depth data and residual data.

The parallax data or depth data and the residual data may be collected by the video recording unit 210 capable of recording a 3D video; or, the video recording unit 210 incapable of collecting this information may collect video data first, and then send the collected video data together with parallax data or depth data and residual data collected additionally to the encoding unit 240.

The encoding unit 240 may be configured to: encode 3D video data in an encoding mode corresponding to the received instruction of the view angle of the user to watch and the received instruction of the display mode of a display unit which displays the 3D video data, where the display mode may include two-dimensional (2D) display, binocular 3D video display, or multi-view video display.

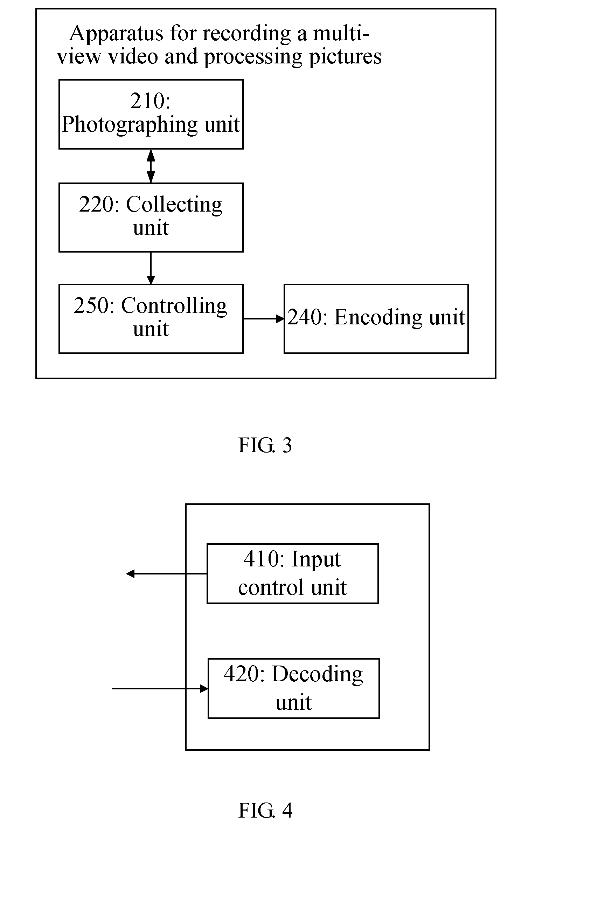

Referring to FIG. 3, an apparatus for recording a multi-view video and processing pictures is provided. This apparatus is similar to the apparatus for recording a multi-view video and processing pictures in the above first embodiment. In this embodiment, the selecting unit is configured to: control the video recording unit to record a video at the specified view angle according to the received instruction for designating a view angle, and obtain at least one channel of data. The selecting unit in this embodiment is called a control unit to be different from the above apparatus for recording a multi-view video and processing pictures in the first embodiment. The apparatus in this embodiment includes:

a video recording unit 210, configured to: record a video, including recording a multi-view video, and output 3D video data;
a collecting unit 220, configured to collect the 3D video data output by the video recording unit 210;
a control unit 250, configured to control the video recording unit 210 to record a video at a specified view angle according to the received instruction for designating a view angle; and

an encoding unit 240, configured to encode data, including encoding the 3D video data output by the collecting unit 220.

In other embodiments, the control unit 250 may be integrated in the video recording unit 210 or collecting unit 220.

The control unit 250 may be further configured to:

control the vidicon corresponding to the specified view angle of the video recording unit 210 to record a video according to the received instruction for designating a view angle, and output the 3D video data; or
control the vidicon of the video recording unit 210 and let the vidicon adjust itself to record a video at the specified view angle according to the received instruction for designating a view angle, and output the 3D video data; or
control the vidicon close to the specified view angle to record a video according to the received instruction for designating a view angle, and output the 3D video data.

The collecting unit 220 may send the data obtained from video recording of the vidicon close to the specified view angle, an internal parameter and an external parameter of each vidicon, and a collection timestamp to the encoding unit 240.

The collecting unit 220 may further include:

a picture processing unit, configured to: reconstruct the data obtained from video recording of the vidicon close to the specified view angle, obtain virtual view angle data, and send the virtual view angle data to the encoding unit 240.

Referring to FIG. 4, an apparatus for decoding a multi-view video, processing and displaying pictures is provided. The apparatus includes:

an input control unit 410, configured to send instructions, including an instruction of recording a video at a specified view angle; and
a decoding unit 420, configured to decode the data encoded and obtained by video recording at the specified view angle.

In this embodiment, the display side sends an instruction of recording a video at a specified view angle to the video collection side so that the video collection side only collects the pictures at the specified view angle, thus reducing the encoding load and the decoding load.

In other embodiments, the decoding unit 420 is configured to: decode 3D video data in the corresponding decoding mode according to the received instruction of the view angle of the user to watch and the received instruction of the display mode of the display unit which displays the 3D video data, where the display mode may include 2D display, binocular 3D video display, or multi-view video display.

The input control unit 410 sends an instruction of recording a video at the specified view angle to the video recording unit 210 on the video collection side, and may further send information about distance from the user to the display surface. This embodiment overcomes the problem that location transfer brings parallax change when the user watches the 3D picture through a 3D display.

The input control unit 410 above may be located in the video recording side or in the remote display side. When the input control unit 410 is located in the remote display side, the instruction of recording a video at the specified view angle may be sent over the network to the apparatus for recording a video and processing pictures.

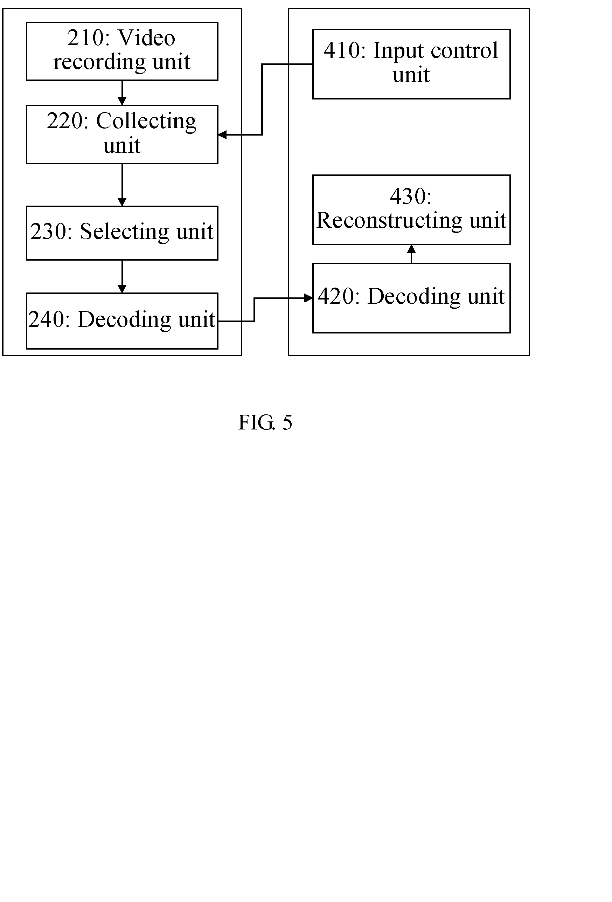

FIG. 5 provides a system for recording a multi-view video and processing pictures. The system includes an apparatus for recording a multi-view video and processing pictures and an apparatus for decoding a multi-view video, processing and displaying pictures.

The apparatus for recording a multi-view video and processing pictures includes:

a video recording unit 210, configured to: record a video, including recording a multi-view video, and outputting 3D video data;
a collecting unit 220, configured to collect the 3D video data output by the video recording unit 210;
a selecting unit 230, configured to select at least one channel of data among multiple channels of video data output by the video recording unit 210; and
an encoding unit 240, configured to encode data, including encoding the 3D video data selected by the selecting unit 230.

The apparatus for decoding a multi-view video, processing and displaying pictures includes:

a decoding unit 420, configured to decode the encoded data output by the encoding unit 240 and obtain the 3D video data; and

an input control unit 410, located in the picture display side of the 3D video data, and configured to send instructions including sending an instruction of recording a video at the specified view angle to the video recording unit 210 or collecting unit 220.

In other embodiments, the apparatus may further include:

a reconstructing unit 430, configured to reconstruct to obtain pictures for the 3D video data output by the decoding unit 420 according to the distance information sent by the input control unit 410.

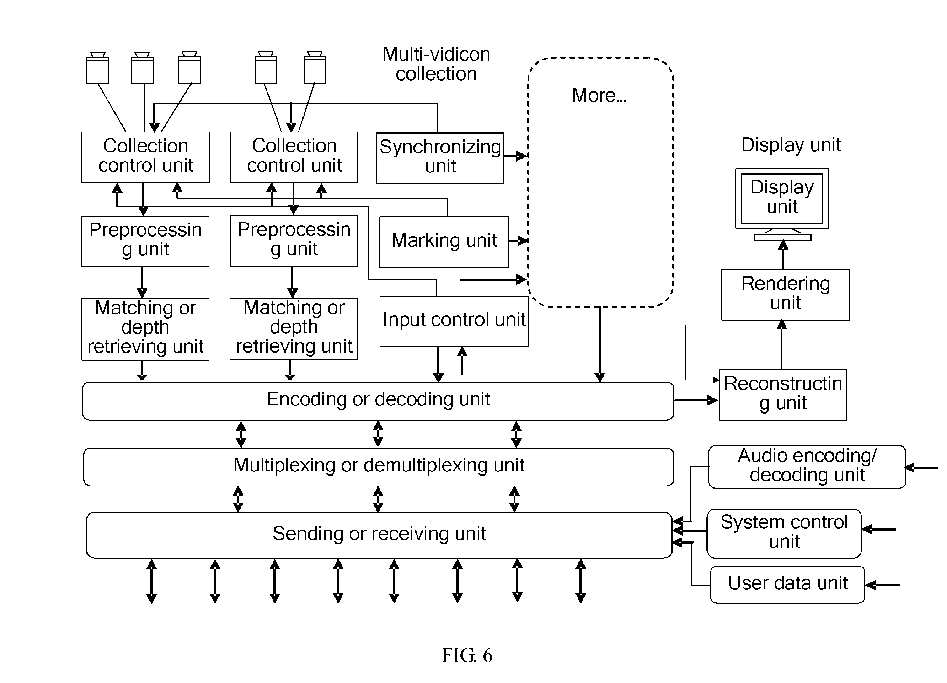

FIG. 6 is a system for recording a multi-view video and processing pictures in an embodiment of the present invention. The system includes an apparatus for recording a video and processing pictures and a display apparatus. The display apparatus includes an input control unit, configured to send instructions, including:

sending an instruction of recording a video at the specified view angle to the apparatus for recording a video and processing pictures, for example, an instruction of recording a video at one or more selected view angles;

sending information about distance between the user and the display screen of the display unit to the reconstructing unit;

sending information of the display mode of the display unit to the apparatus for recording a video and processing pictures, for example, information about whether or not supporting 2D display, binocular 3D display, or holographic display; and

sending information about whether or not supporting adjusting the location of the vidicon.

The input control unit receives the input from the terminal or the user, and sends instructions to the collection control unit, encoding unit, and/or reconstructing unit to control encoding and reconstruction of multi-view video streams. The foregoing information sent by the input control unit, for example, view angle, distance information, and display mode, may be input by the end user through a Graphic User Interface (GUI) or a remote control device. Or the foregoing information, for example, terminal display mode, distance detection, whether or not supporting reconstruction, may be detected by the terminal itself.

The display apparatus includes a receiving unit, a demultiplexing unit, a decoding unit, a reconstructing unit, a rendering unit, and a display unit, which are connected in sequence.

The receiving unit is configured to receive a packet, including receiving a packet and removing the protocol header of the packet, and obtaining encoded data.

The demultiplexing unit is configured to demultiplex the data received by the receiving unit.

The decoding unit is configured to decode the encoded data output by the demultiplexing unit and obtain video data.

The reconstructing unit is configured to reconstruct to obtain pictures for the 3D video data output by the decoding unit according to the distance information sent by the input control unit. The reconstructing unit mainly overcomes the problem of a change of the seen 3D picture because of parallax change brought by location transfer, when the user watches the 3D pictures through an automatic 3D display. The automatic 3D display enables a user to see the 3D pictures without wearing glasses. In this case, however, the distance between the user and the automatic 3D display is changeable, which leads to change of the picture parallax.

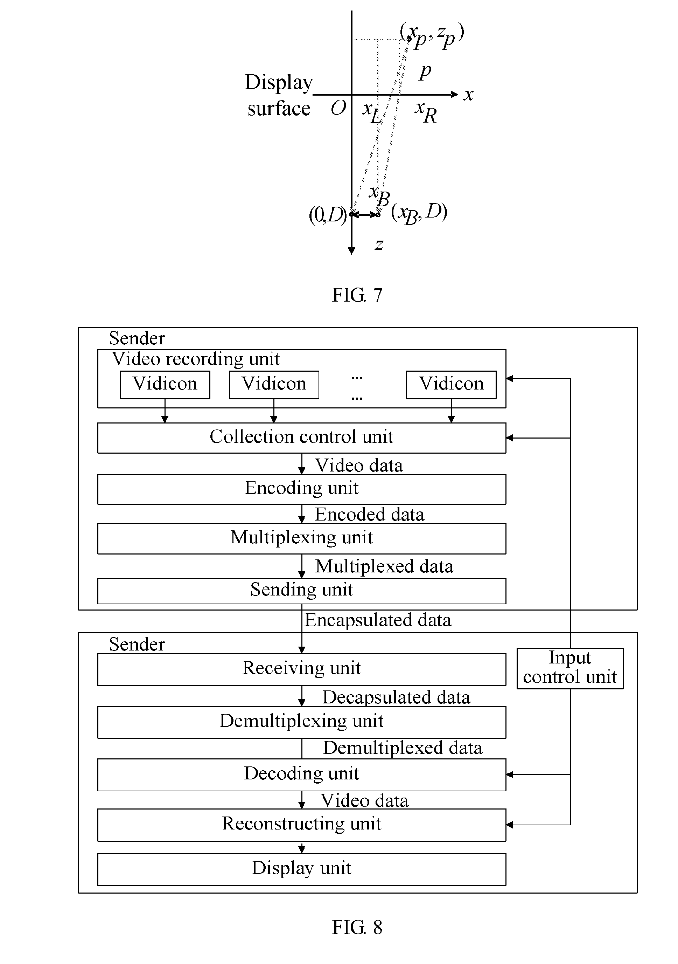

FIG. 7 shows relationships between picture parallax p, object depth $z_p$, and user-display distance D under a parallel vidicon system. It can be derived according to simple geometrical relationships that:

$$\begin{cases} \dfrac{x_L}{D} = \dfrac{x_p}{D - z_p} \\ \dfrac{x_R - x_B}{D} = \dfrac{x_p - x_B}{D - z_p} \end{cases} \Rightarrow \dfrac{x_L - x_R + x_B}{D} = \dfrac{x_B}{D - z_p} \Rightarrow |x_L - x_R| = x_B\left(1 - \dfrac{D}{D - z_p}\right) = x_B\left(\dfrac{1}{\dfrac{z_p}{D} - 1} + 1\right) = p.$$

It can be seen from the formula above that the picture parallax p depends on the distance D between the user and the display. The 3D video pictures received by the 3D video receiver generally have a fixed parallax, which may serve as a reference parallax $p_{ref}$. When D changes, the reconstructing unit needs to adjust the parallax $p_{ref}$ accordingly and generate a new parallax $p'$, and generate another picture according to the new parallax. In this way, proper pictures can be seen when the distance between the user and the display surface changes. The distance between the user and the display surface may be detected automatically according to a depth map calculated by the vidicon, or controlled manually by the user through the input control unit. For example, the user may control the parallax of the reconstructed picture through a remote controller so as that 3D pictures suitable for watching can be obtained within a certain location area.

The rendering unit is configured to render the data output by the decoding unit or the reconstructing unit to the 3D display device.

The display unit is configured to input video data and display video pictures. In this embodiment, the display unit may be an automatic 3D display.

The apparatus for recording a video and processing pictures includes a video recording unit, a collection control unit, a preprocessing unit, a matching or depth retrieving unit, an encoding unit, a multiplexing unit, and a sending unit, which are interconnected in sequence. In addition, the apparatus further includes a marking unit and a synchronizing unit, both connected with the collection control unit respectively.

The video recording unit is configured to record a video, including recording a multi-view video, namely, record a video of the same scene at different view angles, and output 3D video data.

The collection control unit is configured to control operations of the video recording unit, including controlling the video recording unit to record a video at the specified view angle according to the instruction for designating a view angle sent by the input control unit, and output the 3D video data. The detailed operations include:

controlling the vidicon corresponding to the specified view angle of the video recording unit to record a video according to the received instruction for designating a view angle, and output the 3 D video data; or

controlling the vidicon of the video recording unit and letting the vidicon adjust itself to record a video at the specified view angle according to the received instruction for designating a view angle, and output the 3 D video data; or

controlling the vidicon close to the specified view angle to record a video according to the received instruction for designating a view angle, and output the 3D video data.

The collection control unit may control a set of vidicons to collect and output video pictures. The number of the vidicons of the set of vidicons may be configured according to situations and requirements. If there is one vidicon, the collection control unit outputs 2D video streams; if there are two vidicons, the collection control unit outputs binocular 3D video streams; when there are more than two vidicons, the collection control unit outputs multi-view video streams. For analog vidicons, the collection control unit needs to convert the analog picture signals to digital video pictures. The pictures are stored in the buffer of the collection control unit in the form of frames.

In addition, the collection control unit sends the collected pictures to the marking unit for vidicon marking. The marking unit returns the obtained internal parameter and external parameter of the vidicon to the collection control unit. According to these parameters, the collection control unit sets up one-to-one relationships between the video streams and the attributes of the collecting vidicon. The attributes include unique serial number of the vidicon, the internal parameter and the external parameter of the vidicon, and collection timestamp of each frame. The collection control unit outputs the vidicon attributes and the video streams in a specific format. In addition to the foregoing functions, the collection control unit further provides a function of controlling the vidicon and a function of picture collection synchronizing. The collection control unit can perform operations such as translation, rotation, zoom-in and zoom-out through a remote control interface of the vidicon according to the parameters marked by the vidicon. The collection control unit may provide synchronous clock signals for the vidicon through the synchronization interface of the vidicon to control synchronous collection. In addition, the collection control unit can accept control of the input control unit, for example, shutting down video collection of unneeded vidicons according to the view angle information selected by the user, namely, control the vidicon corresponding to the specified view angle of the video recording unit to record a video according to the instruction for designating a view angle received from the input control unit, or control the vidicon of the video recording unit and letting the vidicon adjust itself to record a video at the specified view angle according to the received instruction for designating a view angle, or control the vidicon close to the specified view angle to record a video according to the received instruction for designating a view angle.

The synchronizing unit is configured to: generate synchronization signals, input the synchronization signals to the video recording unit, and control the video recording unit to perform synchronous collection; or input the synchronization signals to the collection control unit, and notify the collection control unit to control the video recording unit to perform synchronization collection.

The marking unit is configured to obtain an internal parameter and an external parameter of the vidicon in the video recording unit, and output the vidicon location information such as location correction instruction to the collection control unit.

The preprocessing unit is configured to receive the 3D video data output by the collection control unit and the corresponding vidicon parameters, and preprocesses the 3D video data according to a preprocessing algorithm.

The matching or depth retrieving unit is configured to derive 3D information of the imaging object from the pictures collected by the vidicon or from the 3D video data output by the preprocessing unit, and output the 3D information together with the 3D video data to the encoding unit.

The encoding unit is configured to encode data, including encoding the 3D video data selected by the foregoing units. The encoding unit can also encode the 3D video data in the corresponding encoding mode according to the display mode information sent by the input control unit.

The encoding unit may be combined with the decoding unit as a codec unit, which is responsible for encoding and decoding multiple channels of video pictures. In this embodiment, the codec unit includes multiple types of codec, for example, traditional 2D picture codec (H.263, H.264), codec that supports 2D picture encoding and parallax or depth encoding, and coder that supports an MVC standard. When obtaining the display mode information sent by the input control unit, the 3D video data are encoded in the mode corresponding to the display mode. For example, an MVC standard is used to encode the data if the display mode is adaptable to the MVC.

As mentioned above, in this embodiment, the collection control unit and the video codec unit can receive reverse channel input from the input control unit, and control the collection and the encoding and decoding of the video pictures according to the information sent by a user through the input control unit. The basic control includes the following aspects:

(1) According to the view angle selected by the user, the collection control unit controls collection of video pictures of the vidicon, for example, only collects the pictures can be seen from the view angle of the user and does not collect the video streams of other vidicons, thus reducing the load on the following codec unit. In addition, the collection control unit can control the vidicon to adjust the vidicon according to the view angle information, for example, move or rotate the vidicon in order to collect the video pictures which do not previously belong to the view angle corresponding to the former location of the vidicon.

(2) According to the view angle selected by the user, corresponding video streams are found for encoding. Video streams outside the view angle of the user are not encoded, thus processing load of the codec unit is reduced effectively.

(3) Video streams corresponding to the display mode of the user terminal are encoded and decoded. For example, one channel of 2D video stream is encoded and sent if a terminal only supports 2D display. In this way, the compatibility between the multi-view 3D video communication system and the ordinary video communication system is improved, and unnecessary data transmission is reduced.

The multiplexing unit is configured to multiplex the code data output by the encoding unit.

The sending unit is configured to encapsulate the code data output by the multiplexing unit into packets that comply with Real-time Transport Protocol (RTP), and transmit the packets through a packet-switched network.

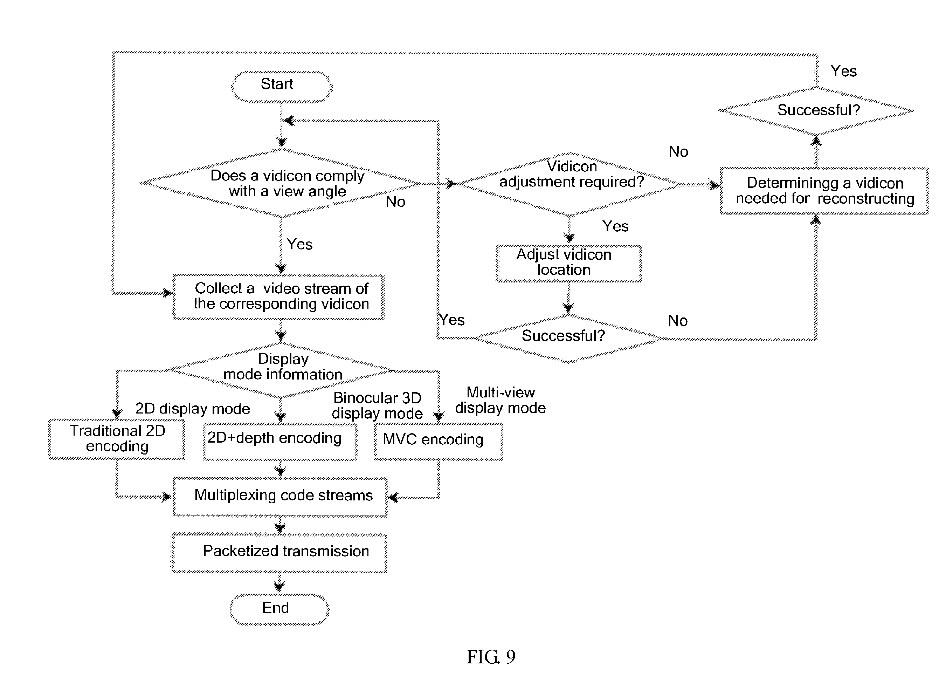

As shown in FIG. 8 and FIG. 9, when working, the collection control unit controls collection of the vidicon in the video recording unit, and outputs video streams. After undergoing a series of processing by the preprocessing unit and the matching or depth retrieving unit, the video streams arrive at the video encoding unit. The input control unit on the display apparatus side sends instructions through a reverse channel to control the video recording unit and/or collection control unit so that the video data from part of view angles are selected among multiple channels of video data output by the video recording unit, and sent to the encoding unit. Here the collection control unit may serve as a functional entity for selecting streams. The collection control unit receives instruction for designating a view angle from the input control unit through the reverse channel, and selects the video streams may include one of the following modes:

(1) compare the view angle (viewpoint) information carried in the instruction for designating a view angle with the location information of each vidicon controlled by the video recording unit, namely, match the view angle carried in the instruction for designating a view angle with the view angle information of each channel of data output by each vidicon one by one, and obtain at least one channel of 3D video data corresponding to the specified view angle. If it is derived from the location information that the recording angle of the vidicon complies with the view angle carried in the received instruction for designating a view angle, record a video at the specified view angle, namely, use this vidicon to collect the video streams;

(2) if the view angle information carried in the instruction for designating a view angle does not comply with the location information of the vidicon, namely, the view angle information of each channel of data does not match the view angle carried in the instruction for designating a view angle, a further judgment about whether the vidicon location needs to be adjusted is needed; if determining that the vidicon location needs to be adjusted, control the vidicon of the video recording unit to adjust the vidicon and record a video at the specified view angle. If the adjustment succeeds, go on with the photographing operation; and

(3) if the adjustment of the vidicon location is not supported or fails, namely, the vidicon can not adjusted to the view angle carried in the instruction for designating a view angle, control the vidicon close to the specified view angle to record a video according to the instruction for designating a view angle, and output the 3D video data; meanwhile, send the data obtained from the video recording of the vidicon close to the specified view angle, the internal parameter and external parameter of each vidicon, and the collection timestamp to the encoding unit so that the pictures of the required view angle can be reconstructed out of the video pictures of other view angles on the receiver side.

If the multiple channels of video data, the internal parameter and external parameter of each vidicon, and the collection timestamp are not output to the encoding unit, namely, if the pictures of the required view angle are not reconstructed on the receiver side, an picture processing unit may be added on the vidicon side. The picture processing unit is configured to obtain virtual view angle data by reconstructing the data obtained from video recording by the vidicon close to the specified view angle, and send the virtual view angle data to the encoding unit.

That is, a judgment is made first to check whether the recording angle of the vidicon complies with the view angle carried in the instruction for designating a view angle. If the recording angle of the vidicon complies with the view angle carried in the instruction for designating a view angle, this vidicon is used to record a video; otherwise, a judgment is made about whether adjustment of the vidicon is supported. If adjustment of the vidicon is supported, the vidicon location may be changed to collect the video pictures of the required view angle. If the required view angle is still unavailable after the vidicon location is adjusted, the third reconstruction mode mentioned above may be applied to collect the view streams of the corresponding vidicon.

After the video stream data is selected, the encoding unit encodes the selected video streams. If more than two channels of video streams are selected, the streams enter the multiplexing unit to be multiplexed, and then sent to the sending unit for packetizing. The packetized streams are transmitted through a network interface. As mentioned above, the encoding unit can encode the 3D video data in the corresponding encoding mode according to the display mode of the display unit on the display apparatus side.

The receiving unit on the display apparatus side receives the packetized streams, which are then processed and sent to the demultiplexing unit for demultiplexing. The demultiplexed streams are sent to the decoding unit for decoding to generate video stream pictures after decoding. If reconstruction is required, the reconstructing unit reconstructs the video stream pictures. The input control unit is located on the receiver side, and controls the collection control unit and/or the encoding unit on the sender side through a reverse channel. With respect to reconstruction, encoding, and decoding, because the receiver needs to collaborate with the sender, the input control unit may have a channel to control both the decoding unit and the reconstructing unit.

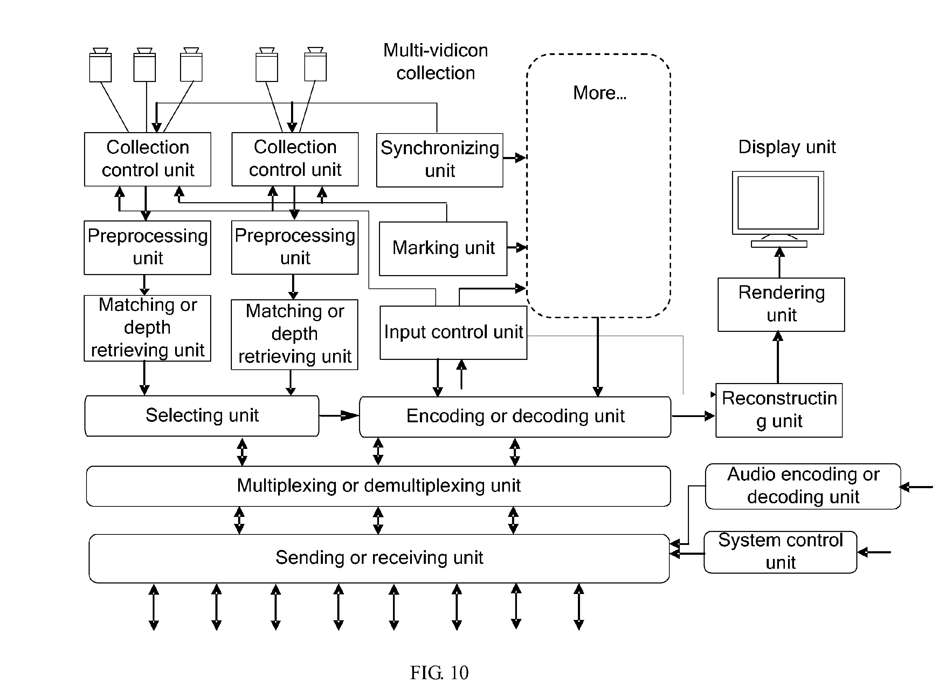

FIG. 10 shows a flow chart of controlling the encoding unit of the input control unit. The sender obtains video picture streams from N vidicons, and needs to determine the video streams corresponding to the selected view angle (viewpoint) first. Because the collection control unit has recorded the view angle information of the vidicon and a corresponding video stream, the collection control unit can locate the video stream according to the view angle (vidicon location) information, namely, match the view angle information of each channel of data with the view angle carried in the instruction for designating a view angle (in the form of viewpoint identifier) one by one, and obtain the video data corresponding to the specified view angle. Afterward, the encoding unit determines the display mode information of the display unit on the display apparatus side, and selects the proper encoding mode according to the display mode information. For example, if the receiver only supports a 2D picture display mode, the encoding unit encodes the video stream in a 2D mode, or performs 2D encoding for the 3D data according to a certain rule. For example, one of the left and right pictures is transmitted. If the display unit can display binocular 3D videos, the encoding unit may encode the video data according to the 2D picture and depth or parallax picture mode. If the display unit needs to simultaneously display multiple pictures whose view angles vary sharply, the encoding unit may encode the video data according to the MVC standard. The encoded video streams are sent to the multiplexing unit for multiplexing by frames or by scenes. The multiplexed data is transmitted in a packetized mode. Because the decoding unit is controlled by the input control unit like the encoding unit on the display apparatus side, the same encoding information can be obtained for decoding.

It is worthy of attention that: All units in the foregoing embodiments of the apparatus for recording a multi-view video and processing pictures can be integrated in a processing module. Likewise, all units in other embodiments of the system for recording a multi-view video and processing pictures can also be integrated in a processing module; or any two or more of the units in the foregoing embodiments can be integrated in a processing module.

In addition, every unit in the embodiment of the present invention may be implemented in the form of hardware, and the part suitable for being implemented through software may be implemented through software function modules. Accordingly, the embodiments of the present invention may be sold or used as independent products, and the part suitable for being implemented through software may be stored in computer-readable storage media for sale or use.

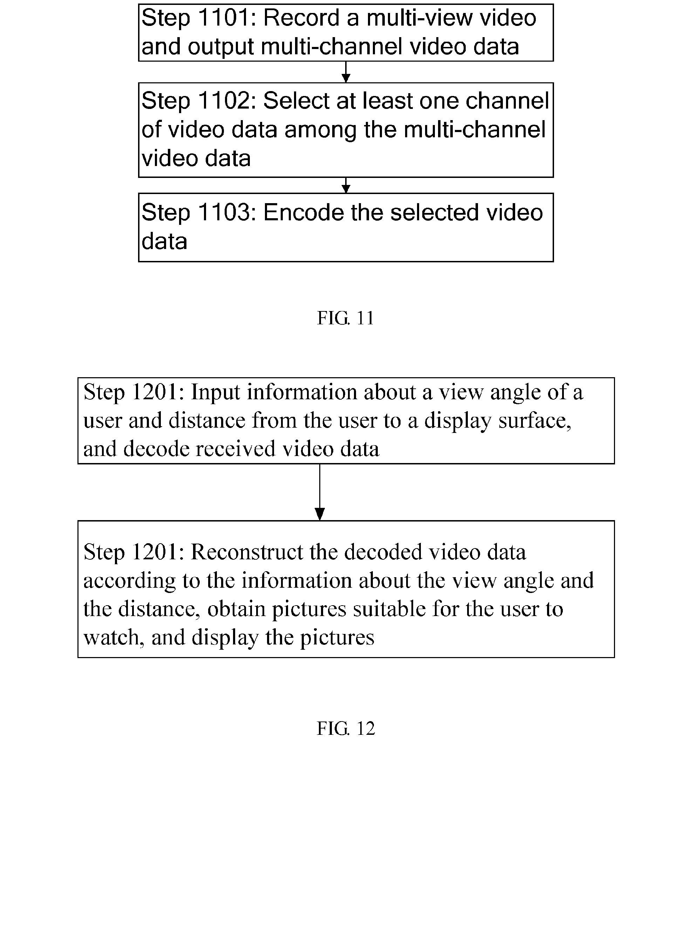

Referring to FIG. 11, the present invention also provides a method for recording a video and processing pictures in the first embodiment of the present invention. The method includes the following steps:

Step 1101: Record a multi-view video and output 3D video data.
Step 1102: Select at least one channel of data among the 3D video data.
Step 1103: Encode the selected 3D video data.

In other embodiments, step 1101 above may be: Record a video at the specified view angle according to the received instruction for designating a view angle, and output 3D video data, which is detailed below:

1) Record a video at the specified view angle when the angle for the video recording complies with the specified view angle carried in the instruction for designating a view angle; or

2) set the angle for the video recording of the vidicon according to the specified view angle carried in the instruction for designating a view angle, and record a video; or

3) control the vidicon close to the specified view angle to record a video when the angle for the video recording does not comply with the specified view angle carried in the instruction for designating a view angle.

The details of step 1101 1 above may also be:

1) Record a multi-view video, and output the 3D video data and the view angle information corresponding to each channel of data; and

2) match the view angle information of each channel of data with the view angle carried in the instruction for designating a view angle one by one according to the received instruction for designating a view angle, and obtain at least one channel of 3D video data corresponding to the specified view angle.

The details of step 1103 above may be: Encode the 3D video data in the corresponding encoding mode according to the display mode of the display unit which displays the 3D video data.

In other embodiments, the method may further include:

Step 1104: Input information about distance between the user and the display surface.

Step 1105: Reconstruct to obtain pictures out of the 3D video data according to the information about the distance.

Persons of ordinary skilled in the art may understand that all or part of the steps of the method for recording a video and processing pictures in the embodiments of the present invention may be implemented by a program instructing relevant hardware. The program may be stored in a computer-readable storage medium. When being executed, the program can perform contents of the steps of the method in each embodiment of the present invention. The storage media may be ROM/RAM, magnetic disk, or compact disk.

As shown in FIG. 12, a method for decoding videos and processing pictures in an embodiment of the present invention includes the following steps:

Step 1201: Input information about a view angle of a user and distance from the user to a display surface, and decode received 3D video data.

Step 1202: Reconstruct pictures for the decoded 3D video data according to the information about the view angle and the distance, and obtain pictures suitable for the user to watch, and display the pictures.

The step of inputting information about a view angle of a user and distance from the user to a display surface includes: The user manually inputs, or the system automatically detects the information about the view angle of the user and the distance between the user and the display surface.

The step of decoding received 3D video data includes decoding the 3D video data in the corresponding decoding mode according to the information about the view angle for displaying the 3D video data and the display mode of the display unit.

In conclusion, the embodiments of the present invention bring at least the following technical effects:

(1) The video picture collecting unit or the encoding unit is controlled to select the video data at the view angles required by the user for encoding, thus improving efficiency of collection and encoding and lowering the requirement processing capability of the system.

(2) Only the video data recorded at the view angles required by the user are collected, encoded, and transmitted, thus efficiencies of processing and transmission are improved at a maximum and quality of real-time transmission is ensured.

(3) The encoding mode of the sender is controlled to according to the display mode capable to be watched by the user, thus complexity of the system is lessened and availability of the system is improved.

In the conventional art, the MVC video pictures need to be displayed in multiple modes such as 2D display, 3D display, and holographic display, etc. Data type of each display mode differs from one another, so is for encoding mode. However, the processing system in the conventional art does not support encoding MVC video pictures according to a display type. The embodiments of the present invention solve this technical problem commendably.

(4) The 3D pictures can be reconstructed according to the information about distance between the user and the display surface, thus picture display of higher quality is realized.

The user location detection method in the conventional art is not reliable, but the 3D picture reconstruction is highly related to the watching position of the user (that is, the distance between the user and the display surface).

Elaborated above are an apparatus, a system, and a method for recording a multi-view video and processing pictures, and a decoding processing method in preferred embodiments of the present invention. The foregoing embodiments are only intended to help understand the method and ideas of the present invention. Although the invention is described through some embodiments, the invention is not limited to such embodiments. It is apparent that those skilled in the art can make modifications and variations to the invention without departing from the scope of the invention. The invention is intended to cover such modifications and variations provided that they fall in the scope of protection defined by the following claims or their equivalents.

**Claims**

1. An apparatus for recording a multi-view video and processing pictures, comprising:

   a video recording unit, configured to record a multi-view video and output three-dimensional (3D) video data;
   a collecting unit, configured to collect the 3D video data output by the video recording unit;
   a selecting unit, configured to select at least one channel of the 3D video data among the 3D video data; and
   an encoding unit, configured to encode data comprising the 3D video data selected by the selecting unit, wherein the foregoing units are connected in sequence.

2. The apparatus for recording a multi-view video and processing pictures according to claim 1, wherein:

   the selecting unit is specifically configured to: match view angle information of each channel of data with a view angle carried in a received instruction for designating a view angle one by one according to the received instruction for designating a view angle, and obtain at least one channel of the 3D video data corresponding to the specified view angle.

3. The apparatus for recording a multi-view video and processing pictures according to claim 1, wherein:

   the selecting unit is integrated in the video recording unit, the collecting unit, or the encoding unit.

4. The apparatus for recording a multi-view video and processing pictures according to claim 1, wherein:

   the selecting unit is specifically configured to: control the video recording unit to record a video at the specified view angle according to the received instruction for designating a view angle, and obtain at least one channel of the 3D video data.

5. The apparatus for recording a multi-view video and processing pictures according to claim 4, wherein the selecting unit is specifically configured to:

   control a vidicon corresponding to the specified view angle of the video recording unit to record a video according to the received instruction for designating a view angle, and output the 3D video data; or
   control a vidicon of the video recording unit to adjust the vidicon and record a video at the specified view angle according to the received instruction for designating a view angle, and
   output the 3D video data; or
   control a vidicon close to the specified view angle to record a video according to the received instruction for designating a view angle, and output the 3D video data.

6. The apparatus for recording a multi-view video and processing pictures according to claim 2 or claim 4, wherein:

   the collecting unit is further configured to send data obtained from video recording by a vidicon close to the specified view angle, an internal parameter and an external parameter of each vidicon, and a collection timestamp to the encoding unit.

7. The apparatus for recording a multi-view video and processing pictures according to claim 2 or claim 4, wherein the collecting unit further comprises:

> a picture processing unit, configured to: reconstruct data obtained from video recording by the vidicon close to the specified view angle, obtain virtual view angle data, and send the virtual view angle data to the encoding unit.

8.  The apparatus for recording a multi-view video and processing pictures according to claim 1, wherein encoding content of the encoding unit comprises at least one of the following:

> original video data;
> original video data and parallax data or depth data; and
> original video data, parallax data or depth data, and residual data.

9.  The apparatus for recording a multi-view video and processing pictures according to any one of claims 1-8, wherein:

> the encoding unit is specifically configured to: encode the 3D video data in a corresponding encoding mode according to a received instruction of a view angle of a user to watch, and a received instruction of a display mode of a display unit which displays the 3D video data, wherein the display mode may be two-dimensional (2D) display, binocular 3D video display, or multi-view video display.

10. An apparatus for decoding a multi-view video, processing and displaying pictures, comprising:

> an input control unit, configured to send instructions, comprising sending an instruction of recording a video at a specified view angle; and
> a decoding unit, configured to decode data which are obtained from video recording at the specified view angle and encoded.

11. The apparatus for decoding a multi-view video, processing and displaying pictures according to claim 10, wherein:

> the decoding unit is specifically configured to: decode three-dimensional (3D) video data in a corresponding decoding mode according to a received instruction of a view angle of a user to watch, and a received instruction of a display mode of a display unit which displays the 3D video data, wherein the display mode may be two-dimensional (2D) display,
> binocular 3D video display, or multi-view video display.

12. A system for recording a multi-view video and processing pictures, comprising an apparatus for recording a multi-view video and processing pictures and an apparatus for decoding a multi-view video, processing and displaying pictures which is interconnected with the apparatus for recording a multi-view video and processing pictures; wherein:

> the apparatus for recording a multi-view video and processing pictures is configured to record a multi-view video, output three-dimensional (3D) video data, select at least one channel of data among the 3D video data, encode the at least one channel of data, and send the encoded at least one channel of data to an apparatus for decoding a multi-view video,
> processing and displaying pictures; and
> the apparatus for decoding a multi-view video, processing and displaying pictures is configured to: send an instruction of recording a video at a specified view angle to the apparatus for recording a multi-view video and processing pictures, and decode the encoded at least one channel of data sent by the apparatus for recording a multi-view video and processing pictures.

13. The system for recording a multi-view video and processing pictures according to claim 12, wherein:

> the apparatus for decoding a multi-view video, processing and displaying pictures is further configured to send information about distance between a user and a display surface, and
> reconstruct to obtain pictures out of the 3D video data output by a decoding unit according to distance information sent by an input control unit.

14. A method for recording a video and processing pictures, comprising:

> recording a multi-view video and outputting three-dimensional (3D) video data;

selecting at least one channel of data among the 3D video data; and

encoding the selected 3D video data.

**15.** The method for recording a video and processing pictures according to claim 14, wherein the recording the multi-view video and outputting of the 3D video data comprises:

recording a video at a specified view angle according to a received instruction for designating a view angle, and outputting the 3D video data and view angle information;

and

matching the view angle information of each channel of data with the view angle carried in the instruction for designating a view angle one by one according to the received instruction for designating a view angle, and obtaining at least one channel of the 3D video data corresponding to the specified view angle.

**16.** The method for recording a video and processing pictures according to claim 15, wherein the recording the video at the specified view angle according to the received instruction for designating the view angle comprises:

recording a video at the specified view angle when a recording angle complies with the view angle carried in the instruction for designating a view angle; or

setting the recording angle of a vidicon according to the view angle carried in the instruction for designating a view angle, and recording a video; or

if the recording angle does not comply with the view angle carried in the received instruction for designating a view angle, controlling a vidicon close to the specified view angle to record a video, reconstructing video data obtained from video recording by the vidicon close to the specified view angle to obtain virtual view angle data, and sending the virtual view angle data to an encoding unit.

**17.** The method for recording a video and processing pictures according to claim 14, wherein the encoding the selected 3D video data comprises:

encoding the 3D video data in a corresponding encoding mode according to information about a view angle for displaying the 3D video data and a display mode of a display unit.

**18.** A method for decoding a video and processing pictures, comprising:

inputting information about a view angle of a user and distance between the user and a display surface, and decoding received three-dimensional (3D) video data; and

reconstructing pictures out of the decoded 3D video data according to the information about the view angle and the distance, obtaining pictures suitable for the user to watch, and displaying the pictures.

**19.** The method for decoding a video and processing pictures according to claim 18, wherein the inputting information about the view angle of the user to watch and distance between the user and the display surface comprises:

by the user, inputting the information about the view angle of the user and the distance between the user and the display surface manually; or

by a system, detecting the information about the view angle of the user and the distance between the user and the display surface automatically.

**20.** The method for decoding a video and processing pictures according to claim 18, wherein the decoding the received 3D video data comprises:

decoding the 3D video data in a corresponding decoding mode according to information about a view angle for displaying the 3D video data and a display mode of a display unit.

Step 101: Obtain motional pictures and information from multiple vidicons, and generate multiple multi-view encoded streams

Step 102: Receive view angle information and user-selected display mode information from a reserved channel

Step 103: According to the reverse channel information, select a group of encoded streams for multiplexing by frames or by scenes among the multi-view encoded streams, where every stream has the same time information

FIG. 1

Apparatus for recording a video and processing pictures

210: Photographing unit

220: Collecting unit

230: Selecting unit → 240: Encoding unit

FIG. 2

Apparatus for recording a multi-
view video and processing pictures

210:
Photographing unit

220: Collecting
unit

250: Controlling
unit

240: Encoding unit

FIG. 3

410: Input
control unit

420: Decoding
unit

FIG. 4

```
┌─────────────────────────────┐   ┌─────────────────────────────┐
│  ┌───────────────────────┐  │   │  ┌───────────────────────┐  │
│  │    210: Video         │  │   │  │  410: Input control   │  │
│  │   recording unit      │  │   │  │        unit           │  │
│  └───────────┬───────────┘  │   │  └───────────────────────┘  │
│              ↓              │   │                             │
│  ┌───────────────────────┐  │   │                             │
│  │   220: Collecting     │◄─┼───┤                             │
│  │        unit           │  │   │  ┌───────────────────────┐  │
│  └───────────┬───────────┘  │   │  │        430:           │  │
│              ↓              │   │  │  Reconstructing unit  │  │
│  ┌───────────────────────┐  │   │  └───────────▲───────────┘  │
│  │  230: Selecting unit  │  │   │              │              │
│  └───────────┬───────────┘  │   │  ┌───────────────────────┐  │
│              ↓              │   │  │  420: Decoding unit   │  │
│  ┌───────────────────────┐  │   │  └───────────────────────┘  │
│  │  240: Decoding unit├──┼───┼──►                           │
│  └───────────────────────┘  │   │                             │
└─────────────────────────────┘   └─────────────────────────────┘
```

FIG. 5

Display unit

Display unit

Rendering unit

Reconstructing unit

Audio encoding/decoding unit

System control unit

User data unit

Multi-vidicon collection

Synchronizing unit

Marking unit

Input control unit

More...

Collection control unit

Preprocessing unit

Matching or depth retrieving unit

Collection control unit

Preprocessing unit

Matching or depth retrieving unit

Encoding or decoding unit

Multiplexing or demultiplexing unit

Sending or receiving unit

FIG. 6

FIG. 7

FIG. 8

```
                          ┌──────────┐                                              ┌─────────┐
                          │  Start   │                                         Yes  │         │
                          └────┬─────┘                                    ╱─────────┤Successful?│
                               │                                         ╱          │         │
                               ▼                                        ╱            └────▲────┘
              ╱─────────────────────────╲            ╱──────────────────╲                 │
             ╱ Does a vidicon comply      ╲    No   ╱   Vidicon           ╲    No    ┌─────┴──────────────┐
            ╱    with a view angle          ╲─────▶╱ adjustment required?   ╲──────▶ │ Determiningg a vidicon│
             ╲                              ╱       ╲                       ╱        │ needed for reconstructing│
              ╲────────────────────────────╱         ╲───────────────────╱          └─────▲──────────────┘
                            │                                  │                           │
                           Yes                                Yes                          │
                            ▼                                  ▼                           │
              ┌──────────────────────────┐          ┌──────────────────┐                  │
              │ Collect a video stream of │          │  Adjust vidicon  │                  │
              │ the corresponding vidicon │          │    location      │                  │
              └──────────────┬───────────┘          └────────┬─────────┘                  │
                             │                                │                            │
                             ▼                       ╱─────────────────╲                   │
              ╱───────────────────────╲     Yes     ╱               No  ╲                  │
             ╱    Display               ╲◀──────────╱   Successful?      ╲─────────────────┘
            ╱  mode information          ╲           ╲                  ╱
             ╲                           ╱            ╲────────────────╱
              ╲─────────────────────────╱
```

|2D display mode | Binocular 3D display mode | Multi-view display mode |

```
  ┌──────────────┐   ┌──────────────────┐   ┌──────────────┐
  │ Traditional 2D│   │ 2D+depth encoding │   │ MVC encoding │
  │   encoding    │   │                  │   │              │
  └───────┬──────┘   └────────┬─────────┘   └──────┬───────┘
          │                   │                    │
          │          ┌────────▼──────────┐         │
          └─────────▶│ Multiplexing code streams │◀─┘
                     └────────┬──────────┘
                              │
                     ┌────────▼──────────┐
                     │ Packetized transmission │
                     └────────┬──────────┘
                              │
                          ┌───▼───┐
                          │  End  │
                          └───────┘
```

FIG. 9

FIG. 10

EP 2 227 021 A1

Step 1101: Record a multi-view video and output multi-channel video data

Step 1102: Select at least one channel of video data among the multi-channel video data

Step 1103: Encode the selected video data

FIG. 11

Step 1201: Input information about a view angle of a user and distance from the user to a display surface, and decode received video data

Step 1201: Reconstruct the decoded video data according to the information about the view angle and the distance, obtain pictures suitable for the user to watch, and display the pictures

FIG. 12

<table>
<tr><td colspan="2" align="center">**INTERNATIONAL SEARCH REPORT**</td><td>International application No.<br>PCT/CN2008/073522</td></tr>
</table>

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H04N7/-, H04N13/-

Documentation searched other than minimum documentation to the extent that such documents are included in the fields searched

Electronic data base consulted during the international search (name of data base and, where practicable, search terms used)

CNKI, CNPAT:

WPI, EPODOC, PAJ: view, shoot+, photograph+, imaging, select+, designat+, specif+, cod+, encod+, transfer, transmit+, distance

**C. DOCUMENTS CONSIDERED TO BE RELEVANT**

| Category* | Citation of document, with indication, where appropriate, of the relevant passages | Relevant to claim No. |
|---|---|---|
| X | CN101035261A (UNIV NINGBO) 12 Sep. 2007（12.09.2007）see the description page 7 line 14-page 10 line 1,page 13 line 2-line 8, figure 2 | 1, 3, 6-9, 14, 17 |
| Y |  | 2, 4, 5, 10-13, 15-16, 20 |
| Y | CN1643939A（SANYO ELECTRIC CO LTD）20 July 2005（20.07.2005）see the description page 19 line 29-page 20 line 26, page23 line 23-page 24 line 28, figure 11 | 2, 4, 5, 10-13, 15-16 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 05 Mar. 2009 （05.03.2009） | **26 Mar. 2009 (26.03.2009)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br>WU Lijun<br>Telephone No. (86-10)62411523 |

Form PCT/ISA/210 (second sheet) (April 2007)

## INTERNATIONAL SEARCH REPORT

International application No.

PCT/CN2008/073522

C (Continuation).    DOCUMENTS CONSIDERED TO BE RELEVANT

| Category* | Citation of document, with indication, where appropriate, of the relevant passages | Relevant to claim No. |
|---|---|---|
| X | CN1973555A(SONY ERICSSON MOBILE COMM AB)30 May 2007（30.05.2007） see the description page 6 line 5- line 21, figure 3 | 18-19 |
| Y | | 20 |
| A | CN1315114(AMATSUSHITA ELECTRIC IND CO LTD et al.）26 Sep. 2001 （26.09.2001）the whole document | 1-20 |

Form PCT/ISA/210 (continuation of second sheet ) (April 2007)

## INTERNATIONAL SEARCH REPORT

International application No.

PCT/CN2008/073522

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:

Claim 1 claims an apparatus for multi-view photographing and image processing, claim 10 claims an apparatus for multi-view decoding and image processing and displaying, claim 18 claims a method for video decoding and image processing, there is no same or corresponding special technical feature between claim 1 and claims 10, 18, they do not belong to a single general inventive concept, and do not meet the requirement of PCT rule 13.1. But about claims 10,18, the examiner need not pay out much work to search, so the applicant do not need to pay additional fee of claims 10, 18.

1. ☐ As all required additional search fees were timely paid by the applicant, this international search report covers all searchable claims.

2. ☒ As all searchable claims could be searched without effort justifying an additional fees, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

## INTERNATIONAL SEARCH REPORT
Information on patent family members

| International application No. |
|---|
| PCT/CN2008/073522 |

| Patent Documents referred in the Report | Publication Date | Patent Family | Publication Date |
|---|---|---|---|
| CN101035261A | 12.09.2007 | none | |
| CN1643939A | 20.07.2005 | WO03081921A1 | 02.10.2003 |
| | | JP2003284093A | 03.10.2003 |
| | | JP2003284094A | 03.10.2003 |
| | | JP2003284095A | 03.10.2003 |
| | | JP2004007395A | 08.01.2004 |
| | | JP2004007396A | 08.01.2004 |
| | | EP1489857A1 | 22.12.2004 |
| | | US2005089212A1 | 28.04.2005 |
| | | KR20050004823A | 12.01.2005 |
| | | JP3702243B2 | 05.10.2005 |
| | | JP3749227B2 | 22.02.2006 |
| | | JP3857988B2 | 13.12.2006 |
| | | KR100812905B | 11.03.2008 |
| CN1973555A | 30.05.2007 | US2005286125A1 | 29.12.2005 |
| | | WO2006000368A1 | 05.01.2006 |
| | | EP1767002A1 | 28.03.2007 |
| | | KR20070030849A | 16.03.2007 |
| | | INDELNP200607564E | 17.08.2007 |
| | | JP2008503779T | 07.02.2008 |
| CN1315114A | 26.09.2001 | WO0105154A1 | 18.01.2001 |
| | | EP1117256A1 | 18.07.2001 |
| | | JP2001008232A | 12.01.2001 |
| | | KR20010072917A | 31.07.2001 |
| | | US6762789B1 | 13.07.2004 |
| | | CN1219402C | 14.09.2005 |

Form PCT/ISA/210 (patent family annex) (April 2007)

## INTERNATIONAL SEARCH REPORT

| International application No. |
| --- |
| PCT/CN2008/073522 |

A.  CLASSIFICATION OF SUBJECT MATTER

H04N7/26（2006.01）i

H04N13/00（2006.01）i

 H04N13/04（2006.01）i

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200710305690